# EUROPEAN PATENT APPLICATION

(11) **EP 3 355 515 A1**
(43) Date of publication of application: **01.08.2018**
(21) Application number: 16848309.7
(22) Date of filing: 14.09.2016
(51) Int. Cl.: H04L 12/24, G06F 17/30

(54) **COMMUNICATION INFORMATION CALCULATION APPARATUS, COMMUNICATION INFORMATION CALCULATION METHOD, RECORDING MEDIUM, AND COMMUNICATION MANAGEMENT SYSTEM**

(30) Priority: 24.09.2015 JP 2015186349
(71) Applicant: NEC Corporation, Tokyo 108-8001 (JP)
(72) Inventor: YAMANE, Masato, Tokyo 108-8001 (JP); ASHINO, Yuki, Tokyo 108-8001 (JP)
(74) Representative: Vossius & Partner Patentanwälte Rechtsanwälte mbB
(86) International application number: PCT/JP2016/004194
(87) International publication number: WO 2017/051518

(57) **Abstract**

Provided are a communication information calculation apparatus and the like that, when displaying communication history information with respect to a particular item, can easily acquire information needed for the display. A communication information calculation apparatus 101 comprises: an item determination unit 102 that, in response to a request for extracting information that satisfies a first condition related to a first item included in a plurality of items measured with respect to communication and satisfies a second condition related to a second item included in the plurality of items, refers to item information with which some items included in the plurality of items are associated, thereby determining a third item associated with the first and second items; an enquiry unit 103 that creates a command to extract data satisfying the first condition related to the first item and the second condition related to the second item, transmits the created command to an information processing apparatus managing the values of the plurality of items measured with respect to communication and receives the data extracted by the information processing apparatus in response to the command; and a calculation unit 104 that calculates, on the basis of the received data, the values related to the first through third items.

## Description

### [Technical Field]

The present invention relates to a communication information generating apparatus or the like which acquires the communication information to be displayed.

### [Background Art]

Processing for detecting threat via the communication network may include, for example, analyzing history information acquired with respect to the communication (hereinafter, represented as "communication history information") and determining whether or not certain communication matches a trend in the communication history information. The processing may include visualizing of the communication history information in order to detect a trend in the communication history information.

Hereinafter, a technique of visualizing the communication history information and a technique of detecting the abnormality in the communication will be described. First, an apparatus (or software) that includes a display function for visualizing the communication history information will be described.

NPL 1 discloses the software that can visualize the information on the communication history information or the like. The software disclosed in NPL 1 has, for example, a function of searching the communication history information on the communication and displaying the detected data in real time.

A process management system disclosed in PTL 2 acquires state information representing a state of a component included in an apparatus to be managed and control information for controlling the apparatus. The process management system generates information where the acquired state information are the acquired control information are associated. The process management system receives a value included in an analysis condition used in analysis of the generated information. The process management system sets the received value to the analysis condition and analyzes the generated information in accordance with the analysis condition to which the value is set. The process management system displays an analysis result as a graph to a displaying apparatus.

Next, an apparatus for detecting an abnormality will be described.

An abnormality detection apparatus disclosed in PTL 1 classifies access logs recorded with respect to the monitoring target apparatus in accordance with a day of the week, a time zone, and a state of a process in order to generate model data. The abnormality detection apparatus calculates degrees of deviation between model data generated at a first timing and model data generated at a second timing and determines whether or not the monitoring target apparatus is abnormal in accordance with the calculated degrees.

### [Citation List]

### [Patent Literature]

PTL 1: Japanese Laid-open Patent Publication No. 2011-034208
PTL 2: Japanese Laid-open Patent Publication No. 2008-306088

### [Non-Patent Literature]

NPL 1: "Splunk Enterprise" [online] Splunk Inc. [searched at September 7, 2015] Internet <URL:http://ja.splunk.com/view/SP-CAAAE8Z>

### [Summary of Invention]

### [Technical Problem]

A user of the software disclosed in NPL 1 needs to generate a retrieval style (command, query) of retrieving information necessary for displaying and transmit the generated command to a database storing the communication history information when communication history information is displayed in accordance with a certain display mode. This is because a plurality of sensors monitoring the communication generates communication history information on the communication at each communication and stores the generated communication history information to the database. Further, a user needs to specify an item to be retrieved from the database in order to generate the retrieval style. As a result, a user unfamiliar with the software has a difficulty in generating the retrieval style for extracting communication history information from the database. Accordingly, the user, also, has a difficulty in visualizing the communication history information stored in the database immediately.

One of objects of the present invention is to provide a communication information generating apparatus or the like that can easily obtain information necessary for displaying when communication history information is displayed with respect to a certain item.

### [Solution to Problem]

In order to achieve the above-described object, as an aspect of the present invention, a communication information generating apparatus including:
item specifying means for referring, in response to a request for extracting information satisfying a first condition with respect to a first item included in a plurality of items measured with respect to communication and a second condition with respect to a second item included in the plurality of items, to item information where partial items included in the plurality of items measured with respect to communication are associated with each other and specifying a third item associated with the first item and the second item
querying means for generating a command for extracting data satisfying the first condition with respect to the first item and the second condition with respect to the second item, transmitting the generated command to an information processing apparatus that manages values of a plurality of items measured with respect to the communication, and receiving data extracted in response to the command by the information processing apparatus; and
calculating means for calculating values with respect to the first item to the third item based on the received data.

In addition, as another aspect of the present invention, a communication information generating method including:
referring, in response to a request for extracting information satisfying a first condition with respect to a first item included in a plurality of items measured with respect to communication and a second condition with respect to a second item included in the plurality of items, to item information where partial items included in the plurality of items measured with respect to communication are associated with each other and specifying a third item associated with the first item and the second item
generating a command for extracting data satisfying the first condition with respect to the first item and the second condition with respect to the second item, transmitting the generated command to an information processing apparatus that manages values of a plurality of items measured with respect to the communication, and receiving data extracted in response to the command by the information processing apparatus; and
calculating values with respect to the first item to the third item based on the received data.

Furthermore, the object is also realized by an associated communication information generating program, and a computer-readable recording medium which records the program.

### [Advantageous Effects of Invention]

The communication information generating apparatus or the like of the present invention can obtain information necessary for displaying can be obtained easily when communication history information is displayed with respect to a certain item.

### [Brief Description of Drawings]

[Fig. 1] Fig. 1 is a block diagram illustrating a configuration of a communication information managing system that includes a communication information generating apparatus according to a first example embodiment of the present invention.
[Fig. 2] Fig. 2 is a flowchart illustrating flows of processing in the communication information generating apparatus according to the first example embodiment.
[Fig. 3] Fig. 3 is a drawing conceptually illustrating one example of communication history information measured with respect to a communication executed in accordance with the HTTP protocol.
[Fig. 4] Fig. 4 is a drawing conceptually illustrating an example of communication history information measured using tcpdump command for capturing a packet that is transmitted/received in the communication network.
[Fig. 5] Fig. 5 is a drawing conceptually illustrating one example of item information.
[Fig. 6] Fig. 6 is a block diagram illustrating a configuration of a communication information managing system including a communication information generating apparatus according to a second example embodiment of the present invention.
[Fig. 7] Fig. 7 is a flowchart illustrating processing flow in the communication information generating apparatus according to the second example embodiment.
[Fig. 8] Fig. 8 is a block diagram illustrating a configuration of a communication information managing system including a communication information generating apparatus according to a third example embodiment of the present invention.
[Fig. 9] Fig. 9 is a flowchart illustrating flows of processing in the communication information generating apparatus according to the third example embodiment.
[Fig. 10] Fig. 10 is a drawing conceptually illustrating one example of item information.
[Fig. 11] Fig. 11 is a block diagram illustrating a configuration of a category information generating apparatus according to a fourth example embodiment of the present invention.
[Fig. 12] Fig. 12 is a flowchart illustrating flows of processing in the category information generating apparatus 501 according to the fourth example embodiment.
[Fig. 13] Fig. 13 is a drawing conceptually illustrating one example of the measurement information according to the fourth example embodiment.
[Fig. 14] Fig. 14 is a drawing conceptually illustrating an example of extracted information referred to by the category information generating apparatus according to the fourth example embodiment.
[Fig. 15] Fig. 15 is a drawing conceptually illustrating one example of category information generated by the category information generating apparatus according to the fourth example embodiment.
[Fig. 16] Fig. 16 is a block diagram illustrating a configuration of a searching apparatus according to a fifth example embodiment of the present invention.
[Fig. 17] Fig. 17 is a flowchart illustrating flows of processing in the searching apparatus according to the fifth example embodiment.
[Fig. 18] Fig. 18 is a drawing conceptually illustrating one example of the search information.
[Fig. 19] Fig. 19 is a block diagram schematically illustrating a hardware configuration of a calculation processing apparatus capable of realizing the communication information generating apparatus and the like according to each example embodiment of the present invention.

### [Description of Embodiments]

Next, example embodiments of the present invention will be described in details with reference to drawings.

### <First example embodiment>

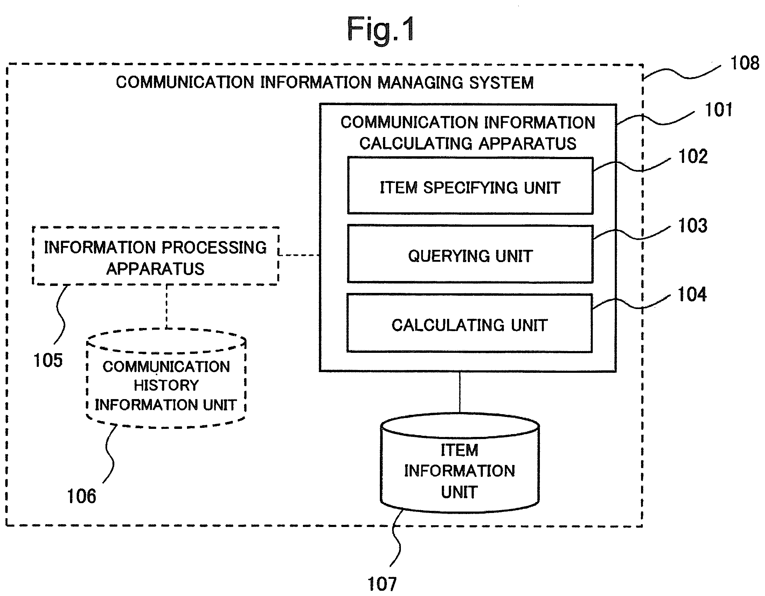

With reference to Fig. 1, a configuration of a communication information generating apparatus 101 according to the first example embodiment of the present invention will be described in details. Fig. 1 is a block diagram illustrating a configuration of a communication information managing system 108 that includes the communication information generating apparatus 101 according to the first example embodiment of the present invention.

The communication information generating apparatus 101 according to the first example embodiment includes an item specifying unit (item specifier) 102, a querying unit (querier) 103, and a calculating unit (calculator) 104.

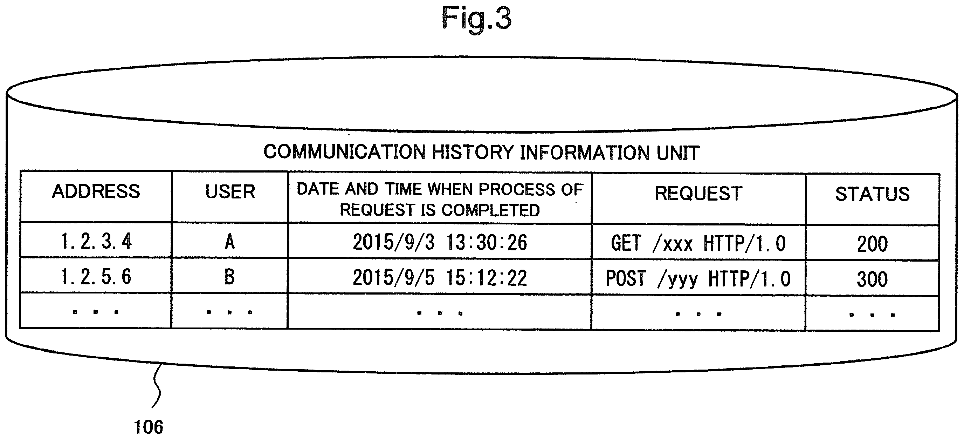

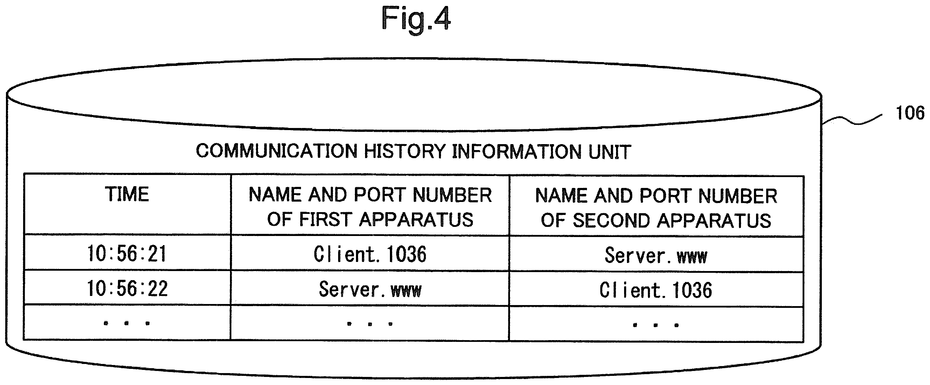

The item specifying unit 102 receives a request for extracting information satisfying a first condition with respect to a first item included in a plurality of items measured with respect to the communication and a second condition with respect to a second item included in the plurality of items. The items measured with respect to the communication will be described later with reference to Fig. 3 and Fig. 4. The first item is, for example, an address representing an apparatus that executes communication. The first condition is, for example, whether or not the address is included in a particular network segment. The second item is, for example, a date and time when the process for the communication is completed. The second condition is, for example, whether or not the date and time is included in a certain period. The item specifying unit 102 specifies a third item associated with the first item and the second item by referring to item information associated with some items included in a plurality of items.

The querying unit 103 generates a command for extracting data satisfying the first condition with respect to the first item and the second condition with respect to the second item from the information processing apparatus or the like that manages a measured value of a plurality of items measured with respect to communication. The querying unit 103 transmits the generated command to the information processing apparatus and receives data extracted in response to the command by the information processing apparatus.

The calculating unit 104 calculates values of the first item to the third item on the basis of the received data. The calculating unit 104, for example, extracts values of the first item to the third item from the received data.

Hereinafter, for convenience of descriptions, it is assumed that the querying unit 103 transmits the command to the information processing apparatus, and the calculating unit 104 extracts values of the first item to the third item based on the data extracted by the information processing apparatus in response to the command. However, the querying unit 103 may specify a processing procedure associated with an identifier identifying the third item specified by the item specifying unit 102, for example, by referring to item processing information where an identifier identifying the third item and the processing procedure for calculating the third item are associated. In this case, the querying unit 103 calculates the value with respect to the third item in accordance with the specified processing procedure. When the third item is a communication amount, the querying unit 103, for example, may execute processing for specifying a packet count with respect to the communication and may execute the processing in accordance with a processing procedure for converting the specified packet count into a byte count,

Next by referring to an example of the communication information managing system 108 including the communication information generating apparatus 101 according to the first example embodiment, processing in the communication information generating apparatus 101 according to the present example embodiment will be described in details.

The communication information managing system 108 includes the communication information generating apparatus 101, an information processing apparatus 105, a communication history information unit (communication history information storage) 106, and an item information unit (item information storage) 107.

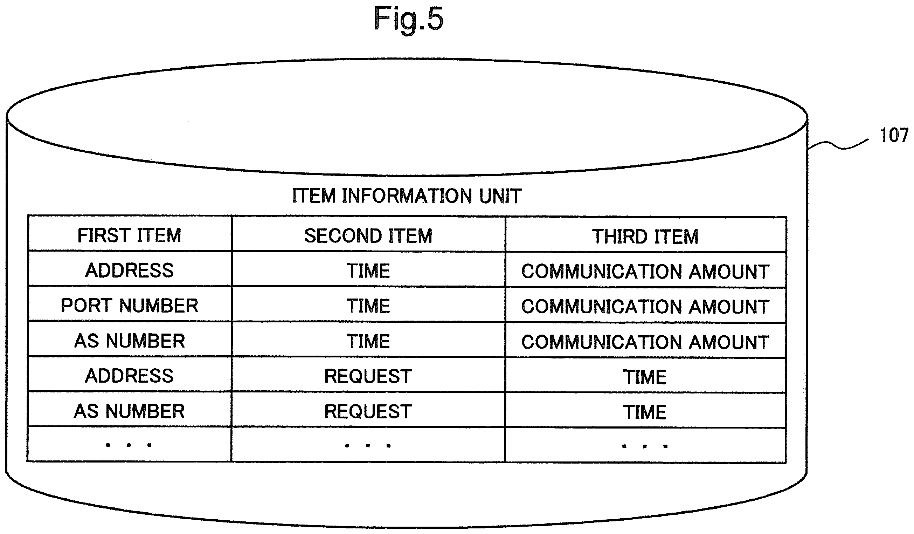

The communication information generating apparatus 101 can be communicably connected with the information processing apparatus 105 that manages the communication history information unit 106 storing communication history information (communication information, exemplified in Fig. 3 and Fig. 4, described later) measured with the communication executed via the communication network as a target. The communication history information is information including the measured value measured with respect to a plurality of items for communication to be a target. Further, the communication information generating apparatus 101 can read information from the item information unit 107 that can store item information (exemplified in Fig. 5, described later) where some items included in the plurality of items are associated with one another.

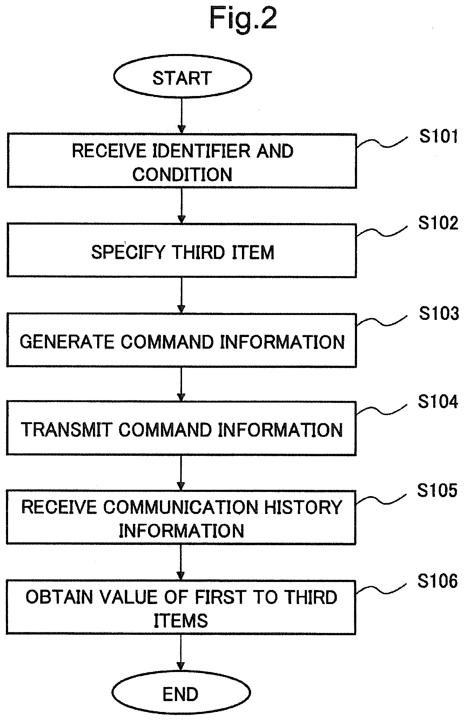

First, with reference to Fig. 3 and Fig. 4, the communication history information will be described. Next, with reference to Fig. 5, the item information will be described. Then, with reference to Fig. 2, processing of the communication information generating apparatus according to the first example embodiment of the present invention will be described.

First, with reference to Fig. 3 and Fig. 4, the communication history information will be described. Fig. 3 is a drawing conceptually illustrating one example of the communication history information measured with respect to the communication executed in accordance with the HTTP protocol in the communication network. Fig. 4 is a drawing conceptually illustrating an example of the communication history information measured using the tcpdump command for capturing the packet that is transmitted/received in the communication network. The HTTP is the abbreviation of Hypertext_Transfer_Protocol.

With reference to Fig. 3, an address of the information processing apparatus transmitting the request, an identification information of a user transmitting the request, and the completion date and time of the processing on the request in the server, the request, and a server status (state) after the request are associated with one another in the communication history information. For example, in the communication history information, the address "1.2.3.4", the user identifier "A", the date and time "2015/9/3_13:30:26", the request "GET_/xxx_HTTP/1.0", and the status "200" are associated. This represents that a user "A" transmits the request "GET_/xxx_HTTP/1.0" from the information processing apparatus identified by the address "1.2.3.4" to the server, and the server completes the processing for the request at the date and time "2015/9/3_13:30:26" in the status "200."

With respect to the communication executed via the communication network, with reference to Fig. 4, the communication history information is obtained by associating a time when the communication is executed, names of apparatus (i.e., a first apparatus and a second apparatus) that execute the communication, and a port number gone through when the communication is executed. For example, in the communication history information, the time "10:56:21," the name of the first apparatus "Client," the port number in the first apparatus "1036," the name of the second apparatus "Server," and the port number of the second apparatus "www" are associated. This represents that the communication is conducted at the time "10:56:21" between the port number "1036" of the apparatus named "Client" and the port number "www" of the apparatus named "Server".

The communication history information is information where measured values measured with respect to a plurality of items (for example, in Fig. 3, date and time, identification information of the user, address or the like) to be measured with respect to the communication as described with reference to Fig. 3 and Fig. 4. The items are, for example, an apparatus identifier of apparatus transmitting information in the communication, an apparatus identifier of an apparatus receiving information in the communication, a amount of information transmitted/received in the communication and the like.

The communication history information may not include all items described with reference to Fig. 3 or Fig. 4. The communication history information may include items other than above described items. In other words, the communication history information is not limited to above described example.

In the first example embodiment of the present invention, the processing and the like of the communication information generating apparatus 101 will be described with reference to an example of the communication in accordance with the HTTP protocol. However, the communication information generating apparatus 101 according to the first example embodiment of the present invention can execute similar processing without limiting to the communication in accordance with the HTTP protocol. The same applies to each example embodiment described hereinafter.

Next, with reference to Fig. 5, the item information that can be stored in the item information unit 107 will be described. Fig. 5 is a drawing conceptually illustrating one example of the item information.

With reference to Fig. 5, the item information is information where identifiers identifying a plurality of items included in the communication history information are associated with one another. For example, the identifier of a first item "address," the identifier of a second item "time," and the identifier of a third item "communication amount" are associated with one another in the item information. This represents that, for example, when a search condition with respect to the item "address" and a search condition with respect to the item "time" are received, the item "communication amount" is obtained from the data satisfying these two search conditions. A plurality of items in the communication history information exemplified in Fig. 3 (or Fig. 4) includes the item "address," the item "time," and the item "communication amount." in a case of the item information exemplified in Fig. 5.

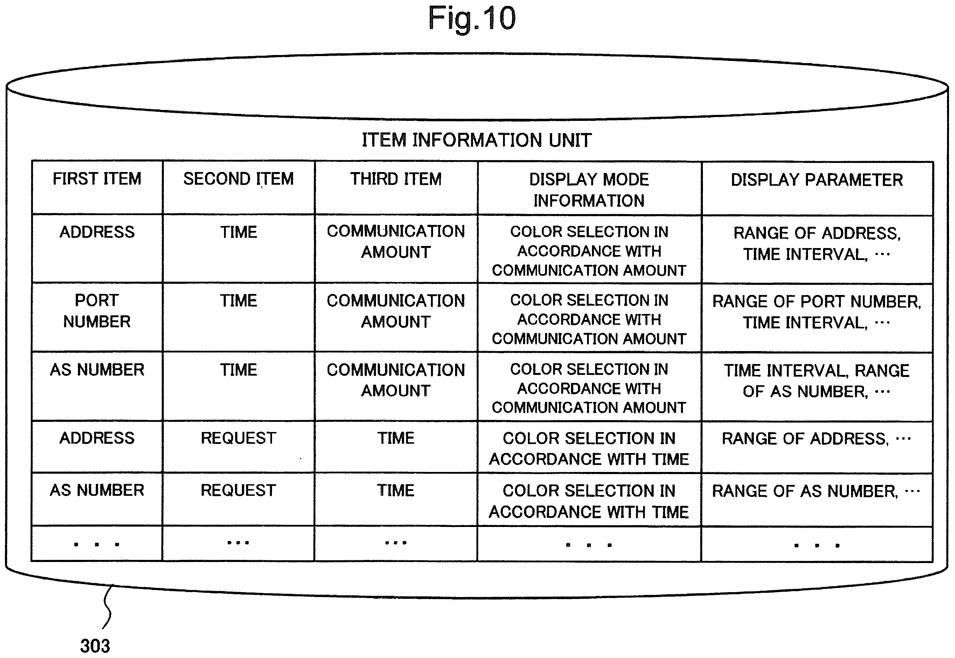

The item information may not necessarily include all items described with reference to Fig. 5. Further, the item information may include items other than the items exemplified in Fig. 5 as described later with reference to Fig. 10. In other words, the item information is not limited to the above described example. In the first example embodiment, it is assumed that the item information, where a certain item (the first item, the second item) and an item (the third item) that is required for obtaining processing in relation to the certain item when the certain item is display in relation to the communication history information, are stored in the item information unit 107. The number of items required for the processing may be two or more.

Next, with reference to Fig. 2, processing of the communication information generating apparatus 101 according to the first example embodiment of the present invention will be described in details. Fig. 2 is a flowchart illustrating flows of the processing of the communication information generating apparatus 101 according to the first example embodiment.

The item specifying unit 102 receives an identifier of a first item included in a plurality of items (hereinafter simply represented as "the first item") and a first condition with respect to the first item via the user interface (not illustrated) or the like (step S101) . The first item is, for example, an apparatus identifier for identifying an apparatus that executes the communication. The first condition is, for example, whether or not measured value with respect to the apparatus identifier belongs to a predetermined network segment. The item specifying unit 102 further receives an identifier of a second item included in a plurality of items (hereinafter simply represented as "the second item") and a second condition with respect to the second item via the user interface or the like (step S101). For example, an identifier of the second item is an identifier representing a time of the communication and the second condition is whether or not a measured value with respect to a measured value representing the time (i.e., time) is within a predetermined period. The item specifying unit 102 may receive requests including the first item, the first condition, the second item, and the second condition.

Next, the item specifying unit 102 refers to the item information (exemplified in Fig. 5) where a plurality of items are associated and specifies a third item associated with the received first item and the received second item based on the item information (step S102). The item specifying unit 102, for example, refers to the item information and specifies the third item "communication amount" associated with the first item "address" and the second item "time".

Next, the querying unit 103 generates command information (query) for retrieving communication information (data) satisfying both the first condition with respect to the first item and the second condition with respect to the second item from the communication history information unit 106 (step S103). The querying unit 103 transmits the generated command information to the information processing apparatus 105 (step S104).

The information processing apparatus 105 receives the command information and extracts communication history information satisfying the first condition with respect to the first item and the second condition with respect to the second item among pieces of communication history information stored in the communication history information unit 106 in response to the received command information. The information processing apparatus 105 transmits the extracted communication history information to the communication information generating apparatus 101.

The querying unit 103 in the communication information generating apparatus 101 receives the communication history information transmitted by the information processing apparatus 105 (step S105).

The calculating unit 104 calculates a measured value with respect to the first item, a measured value with respect to the second item, and a value with respect to the third item based on communication history information received by the querying unit 103 (step S106). The calculating unit 104, for example, extracts the measured value with respect to the first item, the measured value with respect to the second item, and the value with respect to the third item based on communication history information received by the querying unit 103.

The communication information generating apparatus 101 may display the measured value calculated by the calculating unit 104.

Next, effects achieved by the communication information generating apparatus 101 according to the first example embodiment will be described.

The communication information generating apparatus 101 according to the first example embodiment makes it possible to easily obtain displaying information in processing for displaying communication history information in relation to a certain item. This is because the communication information generating apparatus 101 specifies an item input by a user and an item obtained from communication history information satisfying a search condition with respect to the item in the communication history information. For example, even when the information is visualized using the first item "address" and the second item "time," a user unfamiliar with a software for visualizing the communication history information has a difficulty to assume retrieval of information with respect to the third item "communication amount" necessary for the visualization. As a result, the user cannot generate a command for retrieving the communication history information for the visualization from the communication history information unit 106, easily. The communication information generating apparatus 101 according to the present example embodiment, for example, specifies the third item "communication amount" associated with the first item "address" and the second item "time" by referring to the item information. Accordingly, even if a user is unfamiliar with the software, the communication information generating apparatus 101 according to the present example embodiment enables the user to obtain information necessary for the visualization.

On the other hand, when the communication history information is visualized using the software disclosed in NPL 1, a user needs to generate a search condition suitable for the retrieval and command information (query) including the retrieving item when data of interest is extracted from the database storing the communication history information. However, since an item to be visualized does not necessarily match with an item searched based on the command information, a user unfamiliar with a software cannot generate the command information based on the item to be visualized, easily.

Therefore, the communication information generating apparatus 101 according to the present example embodiment makes it possible to easily obtain information necessary for displaying in processing of displaying communication history information in relation to a certain item information.

### <Second example embodiment>

Next, the second example embodiment of the present invention based on the above described first example embodiment will be described.

In the descriptions hereinafter, characteristic portions of the present example embodiment are mainly described, and a configuration identical with that of the above described first example embodiment is denoted with an identical reference numeral to omit the duplicated descriptions.

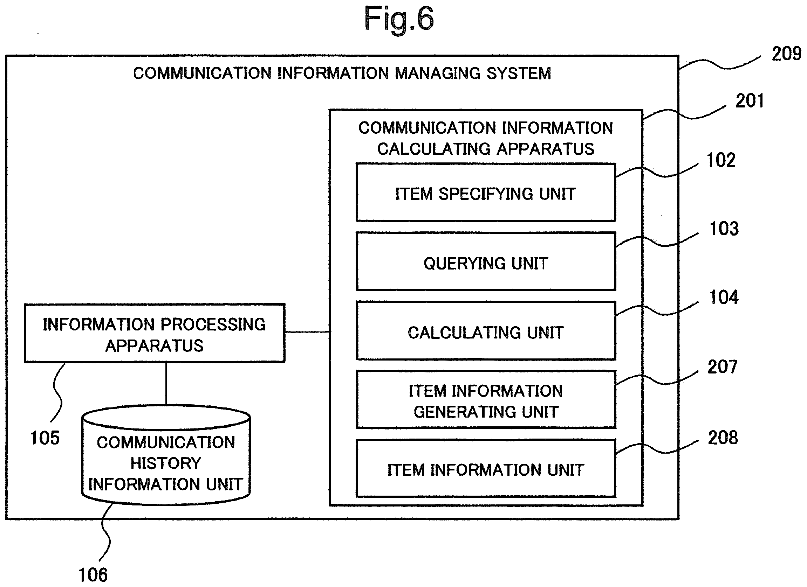

With reference to Fig. 6, a configuration of a communication information generating apparatus 201 according to the second example embodiment of the present invention will be described in details. Fig. 6 is a block diagram illustrating a configuration of a communication information managing system 209 including the communication information generating apparatus 201 according to the second example embodiment of the present invention.

The communication information managing system 209 includes the communication information generating apparatus 201, the information processing apparatus 105, and the communication history information unit 106.

The communication information generating apparatus 201 according to the second example embodiment includes the item specifying unit 102, the querying unit 103, the calculating unit 104, an item information generating unit (item information generator) 207, and an item information unit (item information storage) 208.

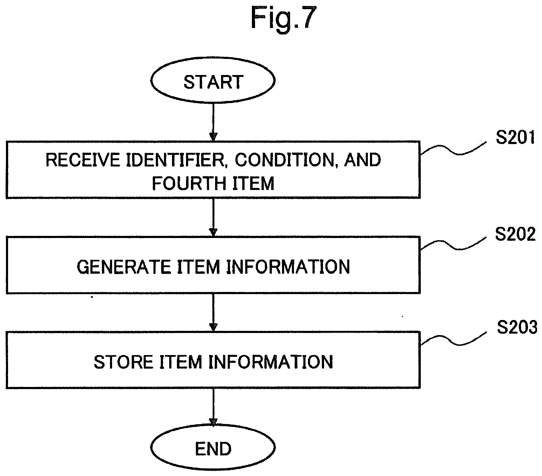

The communication information generating apparatus 201 can be communicably connected with the information processing apparatus 105 that manages the communication history information unit 106 storing communication history information (exemplified in Fig. 3 and Fig. 4) measured with the communication executed via a communication network as the target. The item information unit 208 can store the item information described with reference to Fig. 5. In the second example embodiment, the item information unit 208 may store item information where a certain item and an item necessary for retrieving processing in relation to the certain item are associated in processing of displaying the communication history information in relation to the certain item. Alternatively, the item information unit 208 may store the item information generated by the item information generating unit 207 as described later with reference to Fig. 7.

Next, with reference to Fig. 7, processing of the communication information generating apparatus 201 according to the second example embodiment of the present invention will be described in details. Fig. 7 is a flowchart illustrating processing flow in the communication information generating apparatus 201 according to the second example embodiment.

First, the item information generating unit 207 receives an identifier for identifying a first item included in a plurality of items and a first condition with respect to a measured value of the first item via the user interface (not illustrated) or the like from an outside (step S201). The identifier for identifying the first item is, for example, an apparatus identifier of an apparatus executing a communication. The first condition is, for example, whether or not the measured value of the item identified by the apparatus identifier belongs to a predetermined network segment. The item information generating unit 207 further receives an identifier for identifying a second item included in a plurality of items and a second condition with respect to the measured value of the second item via the user interface or the like (step S201). For example, the identifier of the second item is an identifier identifying a time when the communication is executed and the second condition is whether or not the measured value of the item represented by the time (i.e., time) is within a predetermined period. The item information generating unit 207 may receive requests including the identifier of the first item, the first condition, the identifier of the second item, and the second condition.

When the item information generating unit 207 display the communication history information in relation to the first item and the second item, the item information generating unit 207 receives a fourth item necessary to be extracted from the communication history information unit 106 (step S201). The item information generating unit 207 generates item information where the first item, the second item, and the fourth item are associated (step S202), and stores the generated item information to the item information unit 208 (step S203).

The item information generating unit 207 may further receive processing procedures for obtaining the fourth item (for example, a plurality of pieces of command information, formula for calculation and the like). In this case, the item information generating unit 207 may generate item processing information the identifier for identifying the fourth item and the processing procedure for obtaining the fourth item are associated and store the generated item processing information to the item information unit 208.

Next, effects achieved by the communication information generating apparatus 201 according to the second example embodiment will be described.

The communication information generating apparatus 201 according to the second example embodiment makes it possible to obtain information necessary for displaying in processing of displaying communication history information in relation to a certain item information easily. This is because the communication information generating apparatus 201 according to the second example embodiment includes the communication information generating apparatus 101 according to the first example embodiment.

Further, a certain user can use an item extracted from communication history information in another user's visualizing processing of the communication information according to the communication information generating apparatus 201 of the second example embodiment. This is because when the item information generating unit 207 receives the request and the fourth item necessary to be extracted from the communication history information unit 106, the item information generating unit 207 generates the item information where the item necessary for the visualization (i.e., first item and second item) and the fourth item are associated. When the communication information generating apparatus 201 receives only the request, a certain user can refer to the item information stored in the item information unit 208 and obtain the item used by another user as already described in the first example embodiment.

### <Third example embodiment>

Next, a third example embodiment of the present invention based on the above described first example embodiment will be described.

In the following descriptions, characteristic portions of the present example embodiment are mainly described, and a configuration identical with that of the above described first example embodiment is denoted with an identical reference numeral to omit the duplicated descriptions.

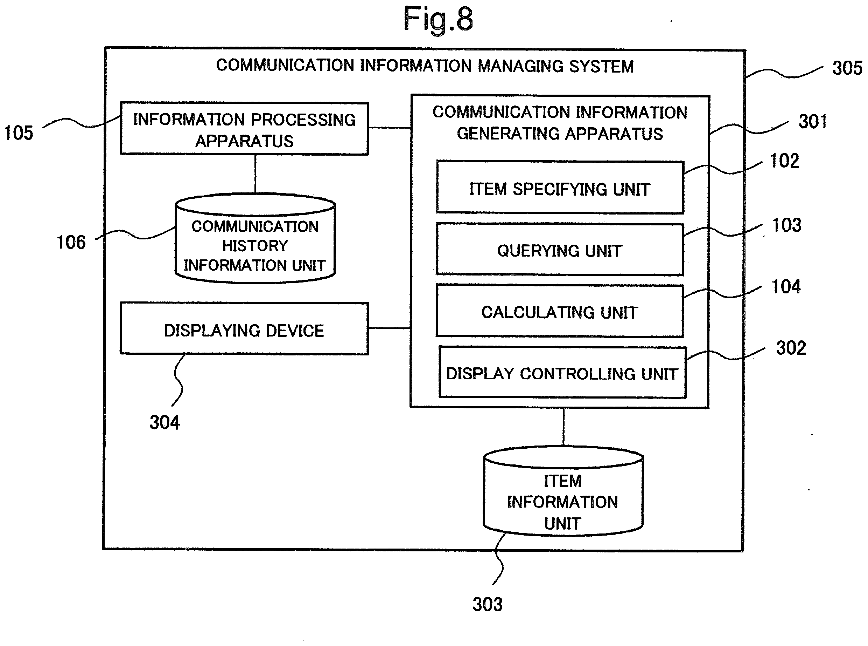

With reference to Fig. 8, a configuration of a communication information generating apparatus 301 according to the third example embodiment of the present invention will be described in details. Fig. 8 is a block diagram illustrating a configuration of a communication information managing system 305 including the communication information generating apparatus 301 according to the third example embodiment of the present invention.

The communication information managing system 305 includes the communication information generating apparatus 301, the information processing apparatus 105, the communication history information unit 106, an item information unit (item information storage) 303, and a displaying apparatus 304.

The communication information generating apparatus 301 according to the third example embodiment includes the item specifying unit 102, the querying unit 103, the calculating unit 104, and a display controlling unit (display controller) 302.

The communication information generating apparatus 301 can be communicably connected with the information processing apparatus 105 that manages the communication history information unit 106 storing communication history information (exemplified in Fig. 3 and Fig. 4) measured with communication executed via a communication network as the target. The item information unit 303 can store item information as exemplified in Fig. 10. Fig. 10 is a drawing conceptually illustrating one example of the item information.

The item information that can be stored in the item information unit 303 is information where an identifier for identifying a certain item when the communication history information is displayed in relation to the certain item, an identifier for identifying an item to be extracted in relation to the certain item, display mode information for displaying on the displaying apparatus 304, and display parameters for designating detail (or range) or the like when the certain item is displayed. For example, the first item "address," the second item "time," the third item "communication amount," and the display mode information "color selection in accordance with communication amount" are associated in the item information. This represents, for example, that the third item "communication amount" is obtained based on communication history information satisfying a search condition with respect to the first item "address" and a search condition with respect to the second item "time" when the two search condition are received. Further, this represents, for example, that the display controlling unit 302 displays information on the displaying apparatus 304 in accordance with display mode information "color selection in accordance with communication amount" when the two are received,. This represents that the communication information generating apparatus 301 can receive a value representing the display parameters "range of address...." when the search condition with respect to the item "address" and the search condition with respect to the item "time" are received. The item information is not limited to the above described example.

The display controlling unit 302 can control information displayed on the displaying apparatus 304 in accordance with display mode information included in pieces of item information and a value representing each parameter included in display parameters.

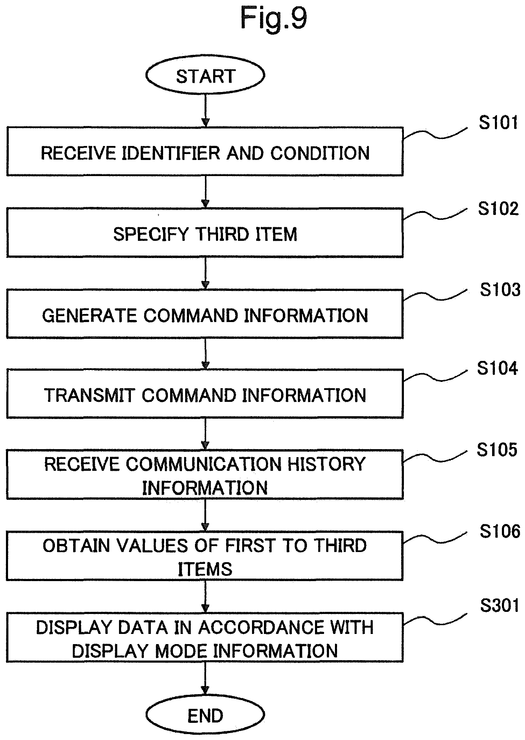

Next, with reference to Fig. 9, the processing of the communication information generating apparatus 301 according to the third example embodiment of the present invention will be described in details. Fig. 9 is a flowchart illustrating flows of the processing of the communication information generating apparatus 301 according to the third example embodiment.

The item specifying unit 102, the querying unit 103, and the calculating unit 104 execute processing similar to those described in the first example embodiment at from step S101 to step S106. Through the processing at from step S101 to step S106, the calculating unit 104 receives a measured value with respect to the first item, a measured value with respect to the second item, and a value with respect to the third item from the information processing apparatus 105.

Next, the display controlling unit 302 refers to item information (exemplified in Fig. 10) stored in the item information unit 303 and specifies display mode information associated with the identifier of the first item and the identifier of the second item. For example, in a case of the item information exemplified in Fig. 10, the display controlling unit 302 specifies display mode information "color selection in accordance with communication amount" associated with the first item "address" and the second item "time" in accordance with the reception of the requests including the first item "address" and the second item "time". Next, the display controlling unit 302 shows the measured value with respect to the first item, the measured value with respect to the second item, and the value with respect to the third item in accordance with the specified display mode information. For example, the display controlling unit 302 displays the measured value with respect to the first item, the measured value with respect to the second item, and a value with respect to the third item through the displaying apparatus 304 to a coordinate system in which the first item is set as a horizontal axis and the second item is set as a vertical axis in accordance with the specified display mode information "color selection in accordance with communication amount," (step S301).

Further, the display controlling unit 302 may specify the display parameters associated with the identifier of the first item and the identifier of the second item. In this case, the display controlling unit 302 receives a value of the parameter included in the specified display parameters from an outside and shows the measured value with respect to the first item, the measured value with respect to the second item, and a value with respect to the third item on the displaying apparatus 304 in accordance with the received value of the parameter and the specified display mode information. For example, the display controlling unit 302 may receive a value of "range of address" and a value of "time interval" from an outside when the display controlling unit 302 refers to the item information exemplified in Fig. 10 and specifies the display parameter "range of address, time interval, ..." associated with the first item "address" and the second item "time" based on the item information. In this case, the display controlling unit 302 shows values with respect to the received first item to the third item to a coordinate system in which the received first item "address" is set as the horizontal axis and the second item "time" is set as the vertical axis in accordance with the display mode. In the coordinate system, the range of the horizontal axis is "range of address" and the interval of the value with respect to the vertical axis is "time interval". In this case, the display controlling unit 302 displays the measured value in accordance with the display mode in which points defined by the measured value of the received first item and the measured value of the received second item are classified by colors in accordance with the display mode information "color selection in accordance with communication amount" based on the value with respect to the received third item.

Similarly to the communication information generating apparatus 201 according to the second example embodiment (Fig. 6), the communication information generating apparatus 301 may include the item information generating unit 207 (not depicted in Fig. 8). In this case, when the item information generating unit 207 receives a request signal including the identifier of the first item and the identifier of the second item, the identifier of the third item, the display mode information, and the identifier of the display parameters, the following item information may be generated. In other words, the communication information generating apparatus 201 may generate item information where the identifier of the first item, the identifier of the second item, the identifier of the third item, the display mode information, and the display parameters are associated with each other. In this case, the item information generating unit 207 stores the generated item information to the item information unit 303.

Next, effects achieved by the communication information generating apparatus 301 according to the third example embodiment will be described.

The communication information generating apparatus 301 according to the third example embodiment make it possible to obtain necessary for displaying in processing of showing the communication history information in relation to the certain item information. This is because the communication information generating apparatus 301 according to the third example embodiment includes the communication information generating apparatus 101 according to the first example embodiment.

Further, even if a user is unfamiliar with a software, the communication information generating apparatus 301 according to the third example embodiment enable the user to easily visualize the communication history information. This is because the communication information generating apparatus 301 generates information necessary for displaying and actually shows the generated information in accordance with display mode information. Further, when the item information generating unit 207 generates the item information as exemplified in Fig. 10, it is possible to achieve an effect that a display mode used by a certain user can be effectively used by a different user.

### <Fourth example embodiment>

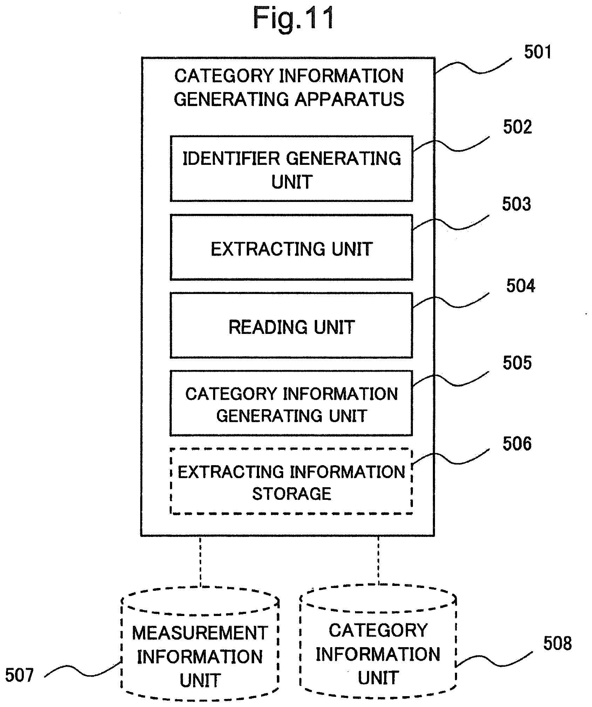

In the present example embodiment, an apparatus that can implement the information processing apparatus 105 exemplified in Fig. 1 or the like (for example, category information generating apparatus) will be described. With reference to Fig. 11, a configuration of a category information generating apparatus 501 according to a fourth example embodiment of the present invention will be described in details. Fig. 11 is a block diagram illustrating a configuration of the category information generating apparatus 501 according to the fourth example embodiment of the present invention.

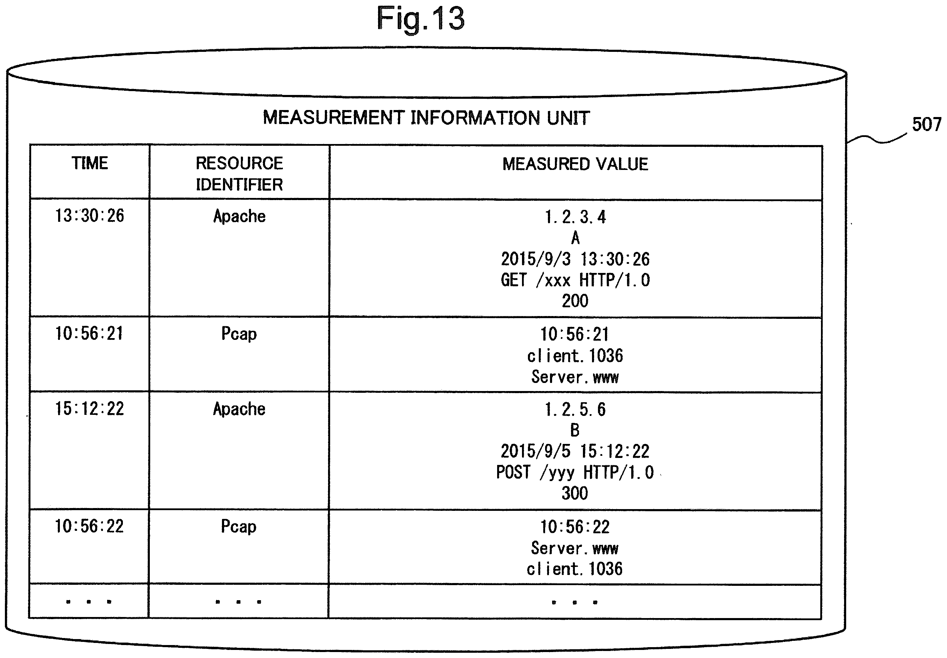

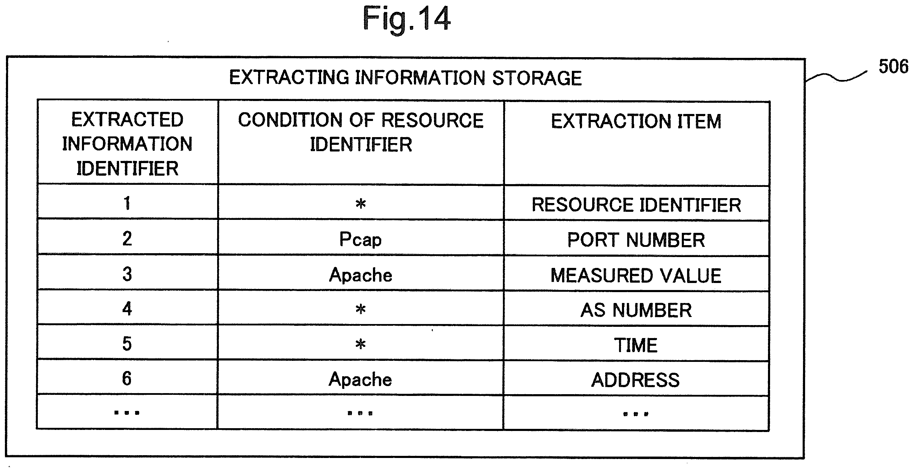

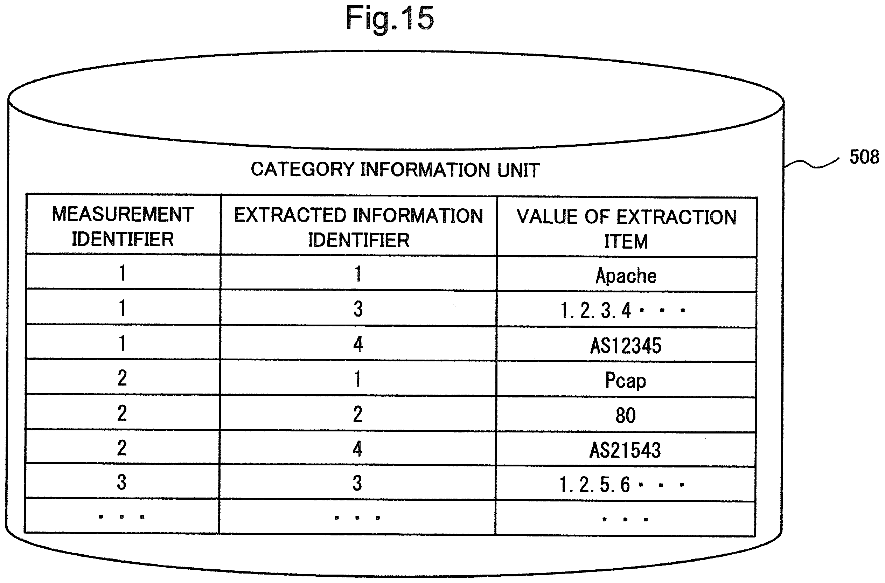

The category information generating apparatus 501 according to the fourth example embodiment includes an identifier generating unit (identifier generator) 502, an extracting unit (extractor) 503, a reading unit (reader) 504, and a category information generating unit (category information generator) 505. The category information generating apparatus 501 may further include an extracting information storage 506. The extracting information storage 506 can store extracting information as exemplified in Fig. 14 (described later). The category information generating apparatus 501 can refer to measurement information (exemplified in Fig. 13, described later) stored in a measurement information unit (measurement information storage) 507. The category information generating apparatus 501 can store category information generated by the category information generating unit 505 to a category information unit (category information storage) 508 (exemplified in Fig. 15, described later).

For the convenience of descriptions, in the present example embodiment, it is assumed that communication history information (log, for example, Fig. 3, Fig. 4) with various formats is converted to a unified format via conversion processing to a certain unified format (normalization processing) and is stored in accordance with the unified format (exemplified in Fig. 13). Further, it is assumed that "measurement information" represents communication history information stored in accordance with the certain unified format in the following descriptions. Fig. 13 is a drawing conceptually illustrating one example of the measurement information according to the fourth example embodiment.

With reference to Fig. 13, in the measurement information unit 507, a time of communication and a resource identifier of a log generation apparatus for measuring the communication history information with respect to the communication, and a measured measurement value with respect to the communication (for example, address, user, request, and name, port number and the like of apparatus) are associated with each other. For example, in the measurement information exemplified in Fig. 13, the time "13:30:26", the resource identifier "Apache", and the measured value"1.2.3.4..." described in a measured value column are associated. This represents that the log generation apparatus identified by the resource identifier "Apache" generates the measured value "1.2.3.4..." at the time "13:30:26".

The measurement information does not necessarily need to include all items described with reference to Fig. 13. In other words, the measurement information is not limited to the above-described example.

Next, with reference to Fig. 14, the extracted information referred to by the category information generating apparatus 501 is described. Fig. 14 is a drawing conceptually illustrating an example of the extracted information referred to by the category information generating apparatus 501 according to the fourth example embodiment.

In the extracted information, an extraction item representing an item extracted from the measurement information exemplified in Fig. 13, a condition of resource identifier for extracting the extraction item, and an extracted information identifier for uniquely identifying the extraction item. For example, in the extracted information exemplified in Fig. 14, the extracted information identifier "2", the condition "Pcap", and the extraction item "port number" are associated. This represents that the extracted information identifier "2" indicates processing for extracting the extraction item "port number" based on the measured value associated with the resource identifier "Pcap" in the measurement information exemplified in Fig. 13.

In the extracted information exemplified in Fig. 14, the extracted information identifier "4," the condition "*" (asterisk) and the extraction item "AS number" are associated. The sign "*" represents that a condition of the resource identifier is not specified. This represents that the extracted information identifier "4" indicates processing for extracting the extraction item "AS number" from all measured values included in the measurement information exemplified in Fig. 13. "AS" represents the abbreviation of Autonomous System. The AS number is an apparatus identifier of a communication-relaying apparatus in communication processing.

A searching apparatus according to the fifth example embodiment (will be described later) executes search processing for a request including extraction items in extracted information stored in the extracting information storage 506. The extracted information is not limited to the extracted information illustrated in Fig. 14.

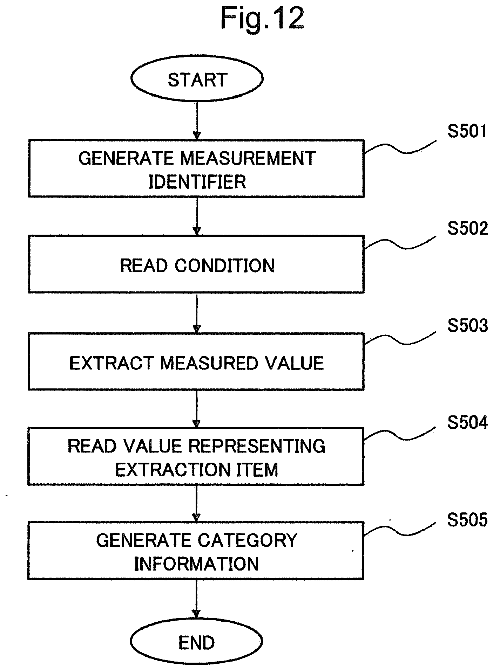

Next, with reference to Fig. 12, processing of the category information generating apparatus 501 according to the fourth example embodiment of the present invention will be described in details. Fig. 12 is a flowchart illustrating flows of processing in the category information generating apparatus 501 according to the fourth example embodiment.

First, the identifier generating unit 502 generates a measurement identifier for uniquely identifying a measured value included in the measurement information (exemplified in Fig. 13) with respect to communication via a communication network (step S501). For example, the identifier generating unit 502 assigns a natural number to a measured value included in the measurement information as the measurement identifier of the measured value included in the measurement information.

Next, the extracting unit 503 reads a certain condition, an extraction item associated with the certain condition, and an extracted information identifier associated with the certain condition from the extracted information exemplified in Fig. 14 (step S502). The extracting unit 503 refers to the measurement information and extracts a measured value associated with the resource identifier (represented as "particular measured value") when the resource identifier satisfies the certain condition in the measurement information exemplified in Fig. 13.

In the process at step S502, the extracting unit 503 reads, for example, information associating the extracted information identifier "3", the condition "Apache" (above-described "certain condition"), and the extraction item "measured value" from the extracted information exemplified in Fig. 14. The extracting unit 503 refers to the measurement information exemplified in Fig. 13. When the resource identifier satisfies the read condition "Apache", the extracting unit 503 extracts measured values "1.2.3.4..." associated with the resource identifier. The extracting unit 503 refers to the measurement information exemplified in Fig. 13 and extracts measured values "1.2.5.6..." when the resource identifier satisfies the read condition "Apache".

The reading unit 504 reads a value representing the extraction item read by the extracting unit 503 at step S502 from the particular measured value extracted by the extracting unit 503 at step S503 (step S504).

In an example of the measurement information depicted in Fig. 13, the reading unit 504 reads at step S504, measured values "1.2.3.4..." as the extraction item associated with the condition "Apache".

The category information generating unit 505 generates category information where a measurement identifier of the particular measured value (generated by the identifier generating unit 502 at step S501), the extracted information identifier read by the extracting unit 503, and the value read by the extracting unit 503 are associated (step S505). When the identifier generating unit 502 assigns a natural number to the measurement information exemplified in Fig. 13 as measurement identifiers, for example, the reading unit 504 generates category information where the measurement identifier "1" of measured value "1.2.3.4...", the extracted information identifier "3", and the measured value "1.2.3.4..." (Fig. 15, described later) are associated. Further, the category information generating unit 505 may generate the category information where the measurement identifier "3" of measured value "1.2.5.6...", the extracted information identifier "3", and the measured value "1.2.5.6..." are associated.

The category information generating apparatus 501 conducts processing of step S502 to step S505 illustrated in Fig. 12, to each information included in the extracted information. In this case, the category information generating apparatus 501 generates category information exemplified in Fig. 15. Fig. 15 is a drawing conceptually illustrating one example of category information generated by the category information generating apparatus 501 according to the fourth example embodiment.

With reference to Fig. 15, the category information associates the measurement identifier of the particular measured value extracted by the extracting unit 503, the extracted information identifier read by the extracting unit 503 at step S502, and a value of the extraction item read by the reading unit 504 with respect to the extraction item. For example, in the category information exemplified in Fig. 15, the measurement identifier "1", the extracted information identifier "3", and values "1.2.3.4..." are associated. This represents that the reading unit 504 reads values "1.2.3.4..." as values of the extraction item associated with the extracted information identifier "3" in accordance with the condition identified by the extracted information identifier "3" with respect to the measurement information identified by the measurement identifier "1".

Next, effects of the category information generating apparatus 501 according to the fourth example embodiment will be described.

According to the category information generating apparatus 501 of the present example embodiment, it is possible to conduct the high-speed search processing to log information. This is because the category information generated by the category information generating apparatus 501 (Fig. 15) is suitable for the use application for the high-speed search.

The reason why the category information generated by the category information generating apparatus 501 is suitable for the use application for the high-speed search will be described.

Common log summation support apparatus may not effectively extract desirable information with respect to communication. This is because processing on the certain search condition need to be executed again at each time of receiving requests even when the requests commonly includes a certain search condition. In other words, the processing on the certain search condition are repeatedly executed at each time of receiving requests.

The category information generating apparatus 501 according to the present example embodiment generates the category information where the measurement identifier of measurement information (exemplified in Fig. 13), the extracted information identifier of the extraction item (exemplified in Fig. 14) and the value extracted by the reading unit 504 (exemplified in Fig. 15) are associated. In other words, the category information generated by the category information generating apparatus 501 is information in which pieces of the measurement information are classified with respect to the extraction item included in the extracted information. Therefore, processing of searching the category information by using a certain request includes processing for determining whether or not an extracted information identifier of the extraction item in the certain request matches an extracted information identifier included in the category information. In the search processing in accordance with the request including the extraction item described with reference to Fig. 14, the category information generating apparatus 501 according to the present example embodiment conducts search processing on the category information obtained by the classification of the measurement information as a search target. As a result, the search processing with respect to a certain search condition has been completed. Therefore, even when the plurality of requests commonly including the certain condition is received, the search processing with respect to the certain search condition does not repeat.

### <Fifth example embodiment>

Next, a fifth example embodiment of the present invention based on the above-described fourth example embodiment will be described.

In the following descriptions, characteristic portions of the present example embodiment will be mainly described, and a configuration identical with that of the above-described fourth example embodiment will be denoted with an identical reference numeral to omit the duplicated descriptions.

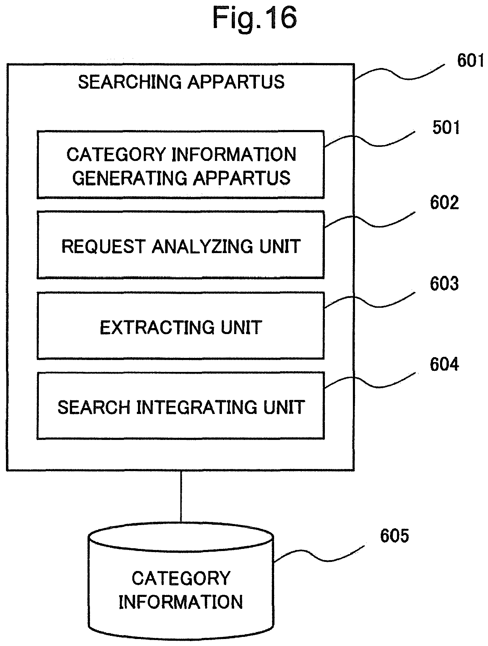

With reference to Fig. 16, a configuration of a searching apparatus 601 according to the fifth example embodiment of the present invention will be described in details. Fig. 16 is a block diagram illustrating a configuration of the searching apparatus 601 according to the fifth example embodiment of the present invention.

The searching apparatus 601 according to the fifth example embodiment includes the category information generating apparatus 501, a request analyzing unit (request analyzer) 602, an extracting unit (extractor) 603, and an search integrating unit (search integrator) 604. The searching apparatus 601 can refer to category information generated by the category information generating apparatus 501 (exemplified in Fig. 15).

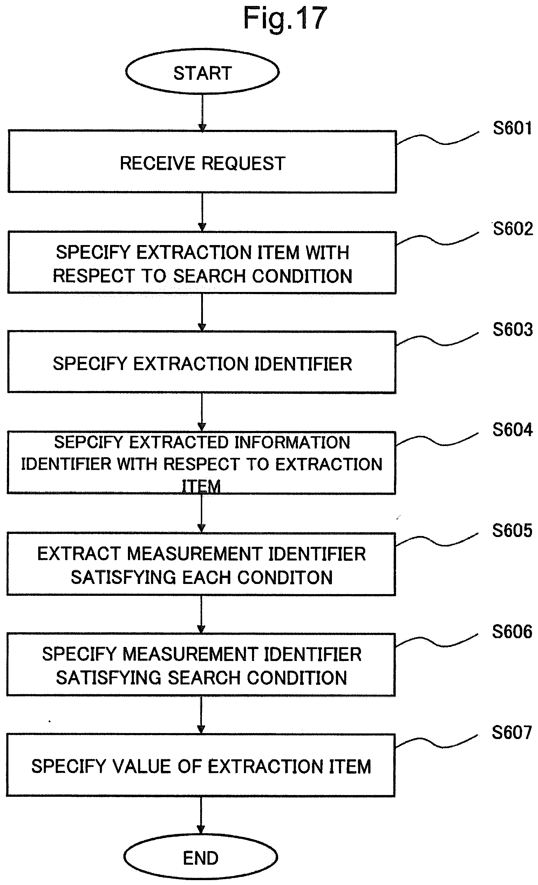

Next, with reference to Fig. 17, processing in the searching apparatus 601 according to the fifth example embodiment of the present invention will be described in details. Fig. 17 is a flowchart illustrating flows of processing of the searching apparatus 601 according to the fifth example embodiment.

It is assumed that the category information generating apparatus 501 generates the category information as exemplified in Fig. 15 in advance.

The request analyzing unit 602 receives a request where a certain search condition and an extraction item representing an item extracted from data satisfying the certain search condition (step S601).

For example, the request is a signal for requiring the AS number gone through in a communication which is conducted within one week in accordance with the HTTP protocol and is conducted for requiring information relating to the certain particular address. In this case, in the certain search condition, the following condition A to the condition C are combined.

The condition A: Whether or not a time of the conducted communication is within one week,

The condition B: Whether or not resources conduct the communication in accordance with the HTTP protocol

The condition C: Whether or not the communication is a communication for requiring information relating to the certain particular address.

In a case of a request in which the above-described condition A to condition C are combined, the extraction item is an apparatus identifier (AS number) of an apparatus gone through when the communication satisfying the certain search condition is conducted. In this example, the request analyzing unit 602 obtains the condition A, the condition B, the condition C, and the extraction item "AS number" from the received request.

The request analyzing unit 602 refers to the extracted information as exemplified in Fig. 14 and specifies the extraction item matching a condition with respect to individual condition included in the search condition within the received request (step S602).

The condition A is a condition with respect to time of the communication. The request analyzing unit 602 specifies the extraction item matching the "time" to be a target for the condition A by referring to the extracted information (exemplified in Fig. 14). In this case, the request analyzing unit 602 specifies the extraction item "time" as the extraction item matching the condition A.

The condition B is a condition with respect to the resource identifier in the communication. The request analyzing unit 602 specifies the extraction item matching the "resource identifier" to be a target for the condition B by referring to the extracted information (exemplified in Fig. 14). In this case, the request analyzing unit 602 specifies the extraction item "resource identifier" as the extraction item matching the condition B.

The condition C is a condition with respect to an address. In this case, the request analyzing unit 602 specifies the extraction item matching the "address" to be a target for the condition C by referring to the extracted information (exemplified in Fig. 14). In this case, the request analyzing unit 602 specifies the extraction item "address" as the extraction item matching the condition C.

Next, the request analyzing unit 602 specifies the extracted information identifier associated with the specified extraction item by referring to the extracted information (step S603).

For example, the request analyzing unit 602 refers to the extracted information as exemplified in Fig. 14 and specifies the extracted information identifier "5" associated with the specified extraction item "time" with respect to the condition A. The request analyzing unit 602, refers to the extracted information and specifies the extracted information identifier "1" associated with the specified extraction item "resource identifier" with respect to the condition B. The request analyzing unit 602 refers to the extracted information and specifies the extracted information identifier "6" associated with the specified extraction item "address" with respect to the condition C.

Further, the request analyzing unit 602 refers to the extracted information as exemplified in Fig. 14 and specifies the extracted information identifier associated with the extraction item within the received request (step S604). For example, the request analyzing unit 602 specifies the extracted information identifier "4" associated with the extraction item "AS number" with respect to the received request.

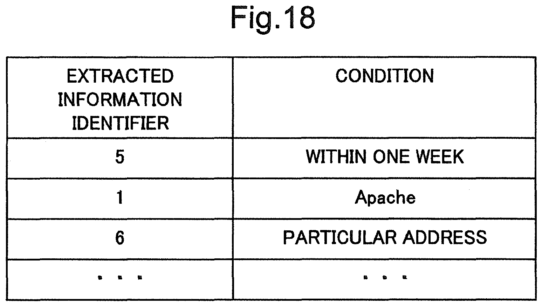

Next, the request analyzing unit 602 generates search information where the extracted information identifier specified with respect to individual condition and a request included in the condition are associated (exemplified in Fig. 18). Fig. 18 is a drawing conceptually illustrating one example of the search information.

In the search information exemplified in Fig. 18, the extracted information identifier "5" and the condition "within one week" are associated. This represents a condition for determining whether or not a value of the extraction item extracted with respect to the extracted information identifier "5" satisfies the condition "within one week." Further, in the search information, the extracted information identifier "1" and the condition "Apache" are associated. This represents a condition for determining whether or not a value of the extraction item extracted with respect to the extracted information identifier "1" satisfies the condition "Apache".

Search information is not limited to the search information exemplified in Fig. 18.

Next, the extracting unit 603 refers to the category information and extracts the measurement identifier satisfying the search information generated by the request analyzing unit 602 (i.e., individual condition in search condition within request) (step S605).

For example, the extracting unit 603 reads a value of the extraction item and a measurement identifier associated with the extracted information identifier "5" in the category information 605 exemplified in Fig. 15 with respect to the condition A (i.e., line one of Fig. 18) and determines whether or not the read value satisfies the condition "within one week" (i.e., condition A). When a value of the extraction item is within one week, the extracting unit 603 extracts the read measurement identifier. When a value of the extraction item is not within one week, the extracting unit 603 does not extract the read measurement identifier.

The extracting unit 603 reads a value of the extraction item and a measurement identifier associated with the extracted information identifier "1" in the category information 605 exemplified in Fig. 15 with respect to the condition B (i.e., line two of Fig. 18), and determines whether or not the read value satisfies the condition "Apache" (i.e., condition B). When a value of the extraction item is "Apache", the extracting unit 603 extracts the read measurement identifier. When the value of the extraction item is not the "Apache", the extracting unit 603 does not extract the read measurement identifier.

For the condition C, the extracting unit 603 conducts processing similar to that executed for the condition A or the condition B.

Next, the search integrating unit 604 specifies the measurement identifier satisfying the search condition among the measurement identifiers extracted by the extracting unit 603 with respect to individual condition within the search condition (step S606).

Hereinafter, step S606 will be specifically described by taking the above-described example. Since the condition A, the condition B, and the condition C are coupled via the AND operation in the search condition received by the request analyzing unit 602, the search integrating unit 604 obtains the measurement identifier included in the measurement identifier extracted by the extracting unit 603 in common with respect to each condition. When the condition A, the condition B, and the condition C are coupled via the OR operation in the search conditions received by the request analyzing unit 602, the search integrating unit 604 obtains the measurement identifier included in any of measurement identifiers extracted by the extracting unit 603 with respect to each condition.

Next, the search integrating unit 604 refers to the category information 605 illustrated in Fig. 15 and specifies a value of the extraction item associated with both the obtained measurement identifier and the extracted information identifier specified by the request analyzing unit 602 with respect to the extraction item at step S604 (step S607). The search integrating unit 604 may output the specified value of the extraction item. In other words, the search integrating unit 604 can specify the value of the extraction item to be extracted with respect to the measurement identifier satisfying the search condition by executing the process shown in step S607.

The search integrating unit 604 may refer to the measurement information unit 507 exemplified in Fig. 13 and extract the measured value identified by the obtained measurement identifier at step S607. The querying unit 103 in the communication information generating apparatus 101 according to the first example embodiment receives the measured value extracted by the search integrating unit 604 at step S105 (Fig. 2) as the communication history information.

Next, effects of the searching apparatus 601 according to the fifth example embodiment will be described.

The searching apparatus 601 according to the present example embodiment enables high-speed search processing to log information of the communication or the like. This is because a configuration of the searching apparatus 601 according to the fifth example embodiment includes a configuration of the category information generating apparatus 501 according to the fourth example embodiment.

Further, the searching apparatus 601 according to the present example embodiment can execute high-speed search processing to the log information of the communication or the like. This is because the pieces of measurement information are classified as the category information in accordance with describable conditions as an element of the search condition in search processing based on the received request.

The searching apparatus 601 according to the present example embodiment achieves an effect of not causing the redundant storage area even if a normalization processing is conducted to the measurement information while enabling an efficient search. For example, when the normalization process is conducted on the measured values among pieces of measurement information exemplified in Fig. 3 or Fig.4, a null value may appear to an item which is not common to a plurality of measured values after the normalization process. On the other hand, the above-described null value is unlikely to appear with respect to the category information 605 (exemplified in Fig. 15) generated by the searching apparatus 601 since the extraction item focused in advance is generated based on the stored extracted information (exemplified in Fig. 14).

In each example embodiment of the present invention described above, by referring to example of the communications conducted in accordance with the HTTP protocol, processing of the searching apparatus 601, the processing of the category information generating apparatus 501 and the like have been described. However, apparatus in each example embodiment of the present invention described above are not limited to the communications conducted in accordance with the HTTP protocol.

### (Hardware Configuration Example)

A configuration example of hardware resources that realize communication information generating apparatus in the first to third example embodiments of the present invention, the classification apparatus in the fourth example embodiment, or the searching apparatus in the fifth example embodiment by using a single calculation processing apparatus (an information processing apparatus or a computer) will be described. However, the communication information generating apparatus (or the classification apparatus, the searching apparatus) may be realized using physically or functionally at least two calculation processing apparatuses. Further, the communication information generating apparatus (or the classification apparatus, the searching apparatus) may be realized as a dedicated apparatus.

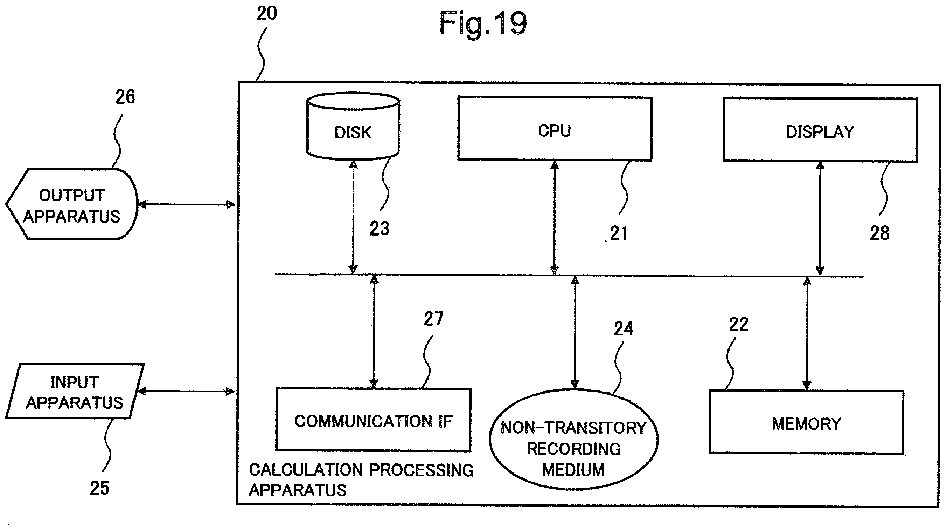

Fig. 19 is a block diagram schematically illustrating a hardware configuration of a calculation processing apparatus capable of realizing the communication information generating apparatus in the first to third example embodiments of the present invention, the classification apparatus in the fourth example embodiment, or the searching apparatus in the fifth example embodiment. A calculation processing apparatus 20 includes a central processing unit (CPU) 21, a memory 22, a disc 23, and a non-transitory recording medium 24. A calculation processing apparatus 20 further includes an input apparatus 25, an output apparatus 26, a communication interface (hereinafter, expressed as a "communication I/F") 27 and a display 28. The calculation processing apparatus 20 can execute transmission/reception of information to/from another calculation processing apparatus and a communication apparatus via the communication I/F 27.

The non-transitory recording medium 24 is, for example, a computer-readable Compact Disc, Digital Versatile Disc. The non-transitory recording medium 24 may be Universal Serial Bus (USB) memory, Solid State Drive or the like. The non-transitory recording medium 24 allows a related program to be holdable and portable without power supply. The non-transitory recording medium 24 is not limited to the above-described media. Further, a related program can be carried via a communication network by way of the communication I/F 27 instead of the non-transitory recording medium 24.

In other words, the CPU 21 copies, on the memory 22, a software program (a computer program: hereinafter, referred to simply as a "program") stored by the disc 23 when executing the program and executes arithmetic processing. The CPU 21 reads data necessary for program execution from the memory 22. When display is needed, the CPU 21 displays an output result on the display 28. When a program is input from the outside, the CPU 21 reads the program from the input apparatus 25. The CPU 21 interprets and executes an communication information generating program (Fig. 2, Fig. 7, or Fig. 9), a classifying program (Fig. 12) or a searching program (Fig. 17) present on the memory 22 corresponding to a function (processing) indicated by each unit illustrated in Fig. 1, Fig. 6, Fig. 8, Fig. 11, or Fig. 16 described above. The CPU 21 sequentially executes the processing described in each example embodiment of the present invention.

In other words, in such a case, it is conceivable that the present invention can also be made using the communication information generating program (or the classifying program, the searching program). Further, it is conceivable that the present invention can also be made using a computer-readable, non-transitory recording medium storing the communication information generating program (or the classifying program, the searching program).

The present invention has been described using the above-described example embodiments as example cases. However, the present invention is not limited to the above-described example embodiments. In other words, the present invention is applicable with various aspects that can be understood by those skilled in the art without departing from the scope of the present invention.

This application is based upon and claims the benefit of priority from Japanese patent application No. 2015-186349, filed on September 24, 2015, the disclosure of which is incorporated herein in its entirety.

### [Reference signs List]

- 101: Communication information generating apparatus
- 102: Item specifying unit
- 103: Querying unit
- 104: Calculating unit
- 105: Information processing apparatus
- 106: Communication history information unit
- 107: Item information unit
- 108: Communication information managing system
- 201: Communication information generating apparatus
- 207: Item information generating unit
- 208: Item information unit
- 209: Communication information managing system
- 301: Communication information generating apparatus
- 302: Display controlling unit
- 303: Item information unit
- 304: Displaying apparatus
- 305: Communication information managing system
- 501: Category information generating apparatus
- 502: Identifier generating unit
- 503: Extracting unit
- 504: Reading unit
- 505: Category information generating unit
- 506: Extracting information storage
- 507: Measurement information unit
- 508: Category information unit
- 601: Searching apparatus
- 602: Request analyzing unit
- 603: Extracting unit
- 604: Search integrating unit
- 605: Category information
- 20: Calculation processing apparatus
- 21: CPU
- 22: Memory
- 23: Disk
- 24: Non-transitory recording medium
- 25: Input apparatus
- 26: Output apparatus
- 27: Communication IF
- 28: Display

## Claims

1. A communication information generating apparatus comprising:
item specifying means for referring, in response to a request for extracting information satisfying a first condition with respect to a first item included in a plurality of items measured with respect to communication and a second condition with respect to a second item included in the plurality of items, to item information where partial items included in the plurality of items measured with respect to communication are associated with each other and specifying a third item associated with the first item and the second item;
querying means for generating a command for extracting data satisfying the first condition with respect to the first item and the second condition with respect to the second item, transmitting the generated command to an information processing apparatus that manages values of a plurality of items measured with respect to the communication, and receiving data extracted in response to the command by the information processing apparatus; and
calculating means for calculating values with respect to the first item to the third item based on the received data.

2. The communication information generating apparatus according to claim 1, further comprising:
an item information storage for storing the item information; and
item information generating means for generating, when the request and a fourth item included in the plurality of items are received, the item information where the first item, the second item included in the request and the received fourth item are associated with each other, and storing the generated item information to the item information storage.

3. The communication information generating apparatus according to claim 2, wherein
in the item information, an apparatus identifier identifying an apparatus that transmits information in the communication, a timing when the communication is executed, and a communication amount transmitted/received in the communication are associated with each other.

4. The communication information generating apparatus according to claim 2, wherein
in the item information, an identifier identifying an information processing apparatus gone through in the communication, a timing when the communication is executed, and a communication amount transmitted/received in the communication are associated with each other.

5. The communication information generating apparatus according to claim 2, wherein
in the item information, a port identifier identifying a port gone through in the communication, a timing when the communication is executed, and a communication amount transmitted/received in the communication are associated with each other.

6. The communication information generating apparatus according to any one of claims 2 to 5, further comprising:
display controlling means for controlling, when the partial items and display mode information followed in displaying the extracted information are associated with each other in the item information, a displaying apparatus to display the data received by the querying means in accordance with the display mode information associated with the first item and the second item in the item information; wherein
when the request, the fourth item, and certain display mode information are received, the item information generating means generates the item information where the first item, the second item, the fourth item, and the received certain display mode information are associated with each other.

7. The communication management system comprising:
the communication information generating apparatus according to any one of claims 1 to claim 6;
a category information generating apparatus; and
a searching apparatus; wherein
the category information generating apparatus includes:
identifier generating means for generating, with respect to measurement information where a measured value measured for the communication and a resource identifier identifying an apparatus that generates the measured value are associated with each other, a measurement identifier that can uniquely identify the measured value;
first extracting means for extracting, when the resource identifier in the measurement information satisfy a condition with respect to the resource identifier in extracting information where an extraction item representing an item to be extracted from the measurement information if the condition is satisfied, and an extracted information identifier that can identify the extraction item are associated with each other, a particular measured value associated with the resource identifier from the measurement information;
reading means for reading a value representing an extraction item in the extracting information from the particular measured value; and
category information generating means for generating category information where a measurement identifier representing the particular measured value, the extracted information identifier in the extracting information, and a value read by the reading means are associated with each other;
the searching apparatus includes;
request analyzing means for specifying, with respect to a request where a search condition described using a first extraction item included in the extracting information and a second extraction item included in the extracting information are associated with each other, a first extracted information identifier associated with the first extraction item and a second extracted information identifier associated with the second extraction item in the extracting information and generating search information where a request included in the search condition and the specified first extracted information identifier are associated with each other;
second extracting means for specifying the measured value associated with the first extracted information identifier in the category information, and specifying, when the specified measured value satisfies the request associated with the first extracted information identifier in the search information, the measurement identifiers associated with the first extracted information identifier in the category information;
search integrating means for obtaining a measurement identifier satisfying the search condition among the measurement identifiers specified by the second extracting means; and
output means for outputting a measured value identified by the measurement identifier obtained by the search integrating means as the communication information; and
the querying means transmits the generated command to the searching apparatus.

8. A communication information generating method comprising:
referring, in response to a request for extracting information satisfying a first condition with respect to a first item included in a plurality of items measured with respect to communication and a second condition with respect to a second item included in the plurality of items, to item information where partial items included in the plurality of items measured with respect to communication are associated with each other and specifying a third item associated with the first item and the second item;
generating a command for extracting data satisfying the first condition with respect to the first item and the second condition with respect to the second item, transmitting the generated command to an information processing apparatus that manages values of a plurality of items measured with respect to the communication, and receiving data extracted in response to the command by the information processing apparatus; and
calculating values with respect to the first item to the third item based on the received data.

9. A recording medium storing a communication information generating program recorded therein, the program making a computer achieve:
an item specifying function for referring, in response to a request for extracting information satisfying a first condition with respect to a first item included in a plurality of items measured with respect to communication and a second condition with respect to a second item included in the plurality of items, to item information where partial items included in the plurality of items measured with respect to communication are associated with each other and specifying a third item associated with the first item and the second item;
a querying function for generating a command for extracting data satisfying the first condition with respect to the first item and the second condition with respect to the second item, transmitting the generated command to an information processing apparatus that manages values of a plurality of items measured with respect to the communication, and receiving data extracted in response to the command by the information processing apparatus; and
a calculating function for calculating values with respect to the first item to the third item based on the received data.

10. The recording medium storing the communication information generating program according to claim 9, further comprising:
an item information function for storing the item information; and
an item information generating function for generating, when the request and a fourth item included in the plurality of items are received, the item information where the first item, the second item included in the request and the received fourth item are associated with each other, and storing the generated item information to the item information storage.
